# EUROPEAN PATENT SPECIFICATION

(11) **EP 3 550 902 B1**
(45) Date of publication and mention of the grant of the patent: **16.06.2021**
(21) Application number: 17894545.7
(22) Date of filing: 25.01.2017
(51) Int. Cl.: H04W 68/00, H04W 4/70, H04W 48/12, H04W 52/02, H04L 5/00

(54) **SIGNAL TRANSMISSION METHOD AND DEVICE**
VERFAHREN UND VORRICHTUNG ZUR SIGNALÜBERTRAGUNG
PROCÉDÉ ET DISPOSITIF DE TRANSMISSION DE SIGNAL

(43) Date of publication of application: 09.10.2019
(73) Proprietor: Huawei Technologies Co., Ltd., Longgang District Shenzhen, Guangdong 518129 (CN)
(72) Inventor: JI, Tong, Shenzhen Guangdong 518129 (CN); JIN, Zhe, Shenzhen Guangdong 518129 (CN); ZHANG, Weiliang, Shenzhen Guangdong 518129 (CN)
(74) Representative: Körber, Martin Hans
(86) International application number: PCT/CN2017/072704
(87) International publication number: WO 2018/137220

(56) References cited:
- WO-A1-2016/048422
- CN-A- 102 917 444
- CN-A- 103 636 241
- CN-A- 104 219 764
- US-A1- 2002 046 271
- PANASONIC: "Configuration of DL control resource set and UE bandwidth", 3GPP DRAFT; R1-1700639, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051208164, Retrieved from the Internet: URL:http://www.3gpp.org/ftp/Meetings_3GPP_ SYNC/RAN1/Docs/ [retrieved on 2017-01-16]
- HUAWEI ET AL: "Design of control resource set", 3GPP DRAFT; R1-1700014, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207556, Retrieved from the Internet: URL:http://www.3gpp.org/ftp/Meetings_3GPP_ SYNC/RAN1/Docs/ [retrieved on 2017-01-16]
- SAMSUNG ELECTRONICS: "Discussion on Paging in NB-IoT", 3GPP DRAFT; R2-156551 DISCUSSION ON FALSE PAGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, US; 20151116 - 20151120 16 November 2015 (2015-11-16), XP051040393, Retrieved from the Internet: URL:http://www.3gpp.org/ftp/Meetings_3GPP_ SYNC/RAN2/Docs/ [retrieved on 2015-11-16]
- "3 Generation Partnership Project; Technical Specification Group Radio Access Network; Evolved Universal Terrestrial Radio Access (E-UTRA); User Equipment (UE) procedures in idle mode (Release 14)", 3GPP STANDARD; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.1.0, 30 December 2016 (2016-12-30), pages 1-46, XP051230310, [retrieved on 2016-12-30]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.1.0, 30 December 2016 (2016-12-30), pages 1-317, XP051230306, [retrieved on 2016-12-30]
- "3rd Generation Partnership Project; Technical Specification Group Radio Access Network; Study on small data transmission enhancements for UMTS (Release 13)", 3GPP STANDARD ; TECHNICAL REPORT ; 3GPP TR 25.705, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG6, no. V13.0.0, 5 July 2015 (2015-07-05), pages 1-68, XP051294290, [retrieved on 2015-07-05]

## Description

### TECHNICAL FIELD

This application relates to the field of wireless communications technologies, and in particular, to a signal transmission method, a device, and a system.

### BACKGROUND

Currently, in a communications system, when no service is to be sent or received, a terminal device may enter an idle mode to reduce power consumption. When a network side device needs to send a service to the terminal device in the idle mode or requires the terminal device to report some services, the network side device may send a paging (paging) indication message to the terminal device through a base station, to instruct the terminal device in the idle mode to enter a connected mode, so that service data can be successfully sent or received.

A network device aggregates paging indications for all terminal devices having a same paging occasion (Paging Occasion, PO) into one paging indication message. The paging indication is used to indicate whether the network device initiates paging to the terminal device. Before sending the paging indication message to the terminal device through a physical downlink shared channel (Physical Downlink Shared Channel, PDSCH), the network device needs to notify the terminal device at the PO through a physical downlink control channel (Physical Downlink Control Channel, PDCCH) whether the paging indication message exists on the PDSCH and notify of scheduling information of the paging indication message (if the paging indication message exists). Specifically, there are the following cases. Case 1: When the paging indication message exists on the PDSCH, the network device schedules the PDSCH by using a PDCCH format 1. When the terminal device obtains, through monitoring at the PO, that a PDCCH format is the PDCCH format 1, the terminal device determines that the PDSCH includes a paging indication message data packet. The paging indication message data packet includes one or more terminal device identifiers. After receiving the paging indication message data packet, the terminal device detects whether the data packet includes a terminal device identifier of the terminal device. After determining that the paging indication message data packet includes the terminal device identifier of the terminal device, the terminal device determines that the network device is paging the terminal device, and then enters a connected mode. Terminal device identifiers corresponding to the same PO may not only include a terminal device identifier included in the paging indication message data packet, but also include another terminal device identifier. In an existing Narrowband Internet of Things (Narrowband Internet of Things, NB-IoT) system, in an extreme scenario, one PO is corresponding to a maximum of 4096 terminal device identifiers, but a quantity of terminal device identifiers included in the paging indication message data packet is far less than 4096. However, a terminal device identified by a terminal device identifier not included in the paging indication message data packet also obtains, through monitoring at the PO, that the PDCCH format is the PDDCH format 1, and also receives the paging indication message data packet included on the PDSCH. After determining that the paging indication message data packet does not include the terminal device identifier of the terminal device, the terminal device remains in an idle mode. This is a false alarm for terminal devices that are not paged, and increases power consumption of the terminal devices that are not paged. Case 2: When the network device sends no paging indication message to any terminal device at a PO, the network device does not schedule the PDSCH through the PDCCH. However, the terminal device at the PO still wakes up to monitor the PDCCH, can learn that no PDCCH exists at the PO only after a failure, and then enters an idle mode. In this case, power consumption is still generated.

In addition, the terminal devices sharing the same PO are located in different environments and in different coverage conditions, and therefore have different capabilities of receiving a paging indication message. The network device highly and repeatedly sends the PDCCH and the paging indication message, so that all the terminal devices can receive the PDCCH at the PO and receive the paging indication message on the PDSCH. However, each time the terminal device wakes up, the terminal device needs to monitor the PDCCH at the PO, and further needs to read the paging indication message on the PDSCH in Case 1. Therefore, power consumption of the terminal device is extremely high, thereby affecting a service life

PANASONIC, "Configuration of DL control resource set and UE bandwidth", vol. RAN WG1, no. Spokane, USA; 20170116 - 20170120, (20170116), 3GPP DRAFT; R1-1700639, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20170116), discloses configuration of DL control resource set and UE bandwidth. For the power saving purpose, there are at least two control resource sets configured for a given UE. Each control resource set is associated with a set of schedulable resource. The schedulable resource set is a reference set over which the scheduling decision is made. Then the UE operating RF bandwidth can be set to the bandwidth of the schedulable resource.

HUAWEI ET AL, "Design of control resource set", vol. RAN WG1, no. Spokane, USA; 20170116 - 20170120, (20170116), 3GPP DRAFT; R1-1700014, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20170116), provide some considerations for the design of control resource set.

WO 2016/048422 A1 discloses that the UE and eNB may perform enhanced physical downlink control channel (EPDCCH)-less operation for scheduling of one or more common control messages.

SAMSUNG ELECTRONICS, "Discussion on Paging in NB-IoT", vol. RAN WG2, no. Anaheim, US; 20151116 - 20151120, (20151116), 3GPP DRAFT; R2-156551 DISCUSSION ON FALSE PAGING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN2/Docs/, (20151116), discusses how to adapt the current LTE paging procedures into NB-IoT with considering both the minimal change of specification and improvement of the power efficiency.

"3 Generation Partnership Project; Technical Specification Group Radio Access Network; Evolved Universal Terrestrial Radio Access (E-UTRA); User Equipment (UE) procedures in idle mode (Release 14)", 3GPP STANDARD; 3GPP TS 36.304, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, (20161230), vol. RAN WG2, no. V14.1.0, pages 1 - 46, "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, (20161230), vol. RAN WG2, no. V14.1.0, pages 1 - 317, and "3rd Generation Partnership Project; Technical Specification Group Radio Access Network; Study on small data transmission enhancements for UMTS (Release 13)", 3GPP STANDARD; TECHNICAL REPORT; 3GPP TR 25.705, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, (20150705), vol. RAN WG6, no. V13.0.0, pages 1 - 68, disclose that the contents of the present document are subject to continuing work within the TSG and may change following formal TSG approval.

### SUMMARY

Embodiments of this application provide a signal transmission method, a device, and a communications system, so as to reduce power consumption caused when a terminal device obtains a paging indication message.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, an embodiment of this application provides a signal sending method, including:
determining, by a network device, a first parameter, and notifying a terminal device of all or a part of the determined first parameter by using a system message and/or higher layer signaling; or determining, by a network device, a first parameter; and sending a first signal to the terminal device based on the first parameter, where the first signal is used to indicate a paging status of the terminal device, and the first parameter includes information used to indicate a resource location of the first signal.

According to another aspect, an embodiment of this application provides a signal receiving method, including:
receiving, by a terminal device, a first parameter sent by using a system message and/or higher layer signaling; or receiving, by the terminal device, a part of a first parameter sent by using a system message and/or higher layer signaling, and determining a remaining part of the first parameter other than the received part of the first parameter; or determining, by the terminal device, a first parameter, where
the first parameter includes information used to indicate a resource location of a first signal;
receiving, by the terminal device based on the first parameter, the first signal sent by the network device, where the first signal is used to indicate a paging status of the terminal device; and
determining, by the terminal device, the paging status of the terminal device based on the first signal.

According to another aspect, an embodiment of this application provides a network device, including a processing module and a sending module. The processing module is configured to determine a first parameter, where the first parameter includes information used to indicate a resource location of a first signal. The sending module is configured to notify, by using a system message and/or higher layer signaling, a terminal device of all or a part of the first parameter determined by the processing module of the terminal device. The sending module is further configured to send the first signal to the terminal device based on the first parameter determined by the processing module, where the first signal is used to indicate a paging status of the terminal device.

According to another aspect, an embodiment of this application provides a network device, including a processing module and a sending module. The processing module is configured to determine a first parameter, where the first parameter includes information used to indicate a resource location of a first signal. The sending module is configured to send the first signal to a terminal device based on the first parameter determined by the processing module, where the first signal is used to indicate a paging status of the terminal device.

According to another aspect, an embodiment of this application provides a terminal device, including a receiving module and a processing module. The receiving module is configured to: receive all or a part of a determined first parameter, where the all or the part of the determined first parameter is notified by a network device to the terminal device by using a system message and/or higher layer signaling, and the first parameter includes information used to indicate a resource location of a first signal; and receive the first signal sent by the network device based on the first parameter, where the first signal is used to indicate a paging status of the terminal device. The processing module is configured to determine the paging status of the terminal device based on the first signal received by the receiving module.

According to another aspect, an embodiment of this application provides a terminal device, including a processing module and a receiving module. The processing module is configured to determine a first parameter. The receiving module is configured to receive the first signal sent by the network device based on the first parameter, where the first signal is used to indicate a paging status of the terminal device. The processing module is configured to determine the paging status of the terminal device based on the first signal received by the receiving module.

The network device sends the first signal by using the first parameter, and the network device notifies the terminal device of all or the part of the first parameter by using the system message and/or higher layer signaling, or the first parameter is pre-configured on the network device and the terminal. Compared with the prior art, a manner of sending the first signal by the network device avoids a case in which the terminal monitors a PDCCH to determine the paging status of the terminal. Therefore, power consumption of the terminal device is reduced to some extent.

In the foregoing embodiments provided in this application, in a possible design, the resource location of the first signal may be determined by using only the first parameter, or may be determined by using the first parameter and another parameter.

In the foregoing embodiments provided in this application, in a possible design, the first parameter may be determined based on pre-configured information.

In the foregoing embodiments provided in this application, in a possible design, the first signal is corresponding to at least one terminal device identifier, and the first signal is used to indicate a paging status of at least one terminal device identified by the at least one terminal device identifier. Because the first signal is corresponding to a terminal device identifier, the terminal device may receive the first signal based on the terminal device identifier, and determine the paging status of the terminal device. This improves efficiency of determining the paging status of the terminal device by the terminal device based on the first signal.

In the foregoing embodiments provided in this application, in a possible design, a possible implementation in which the first signal is corresponding to at least one terminal device identifier may be: Original information carried in the first signal includes at least one first bit group, and each first bit group is corresponding to one terminal device identifier in the at least one terminal device identifier.

In the foregoing embodiments provided in this application, in a possible design, when the first signal is corresponding to at least one terminal device identifier, a possible implementation in which the first signal is used to indicate a paging status of at least one terminal device identified by the at least one terminal device identifier is: The first signal is a first sequence, the first sequence is a sequence that is in a first sequence set and that is corresponding to an actual paging status of the at least one terminal device identified by the at least one terminal device identifier, the first sequence set includes at least one sequence, and each sequence is used to indicate one paging status of the at least one terminal device identified by the at least one terminal device identifier.

The paging status of the at least one terminal device identified by the at least one terminal device identifier is indicated by using the sequence. This improves efficiency of determining the paging status of the terminal device by the terminal device based on the first signal, and reduces power consumption caused when the terminal device detects the first signal.

In the foregoing embodiments provided in this application, in a possible design, it should be understood that each sequence in the first sequence set is used to indicate one paging status of the at least one terminal device identified by the at least one terminal device identifier, and each sequence indicates a different paging status of the at least one terminal device identified by the at least one terminal device identifier.

For example, the first sequence may occupy one or more orthogonal frequency division multiplexing (Orthogonal Frequency Division Multiplexing, OFDM) symbols. The first sequence may be a sequence constituted by 1 and/or -1; the first sequence may be a pseudo random sequence, Hard code, a discrete Fourier transform (Discrete Fourier Transform, DFT) sequence, or Walsh code, or the like, or may be a sequence constituted by some elements of the foregoing type of sequence; the first sequence may be a sequence constituted by a general complex number; or the first sequence may be a ZC sequence, or the like.

In the foregoing embodiments provided in this application, in a possible design, the first signal further includes information used to indicate a system message modification status.

The information about a system message modification status is indicated by using the first signal. Compared with the prior art in which information about a system message modification status is determined by detecting a PO, this reduces power consumption of the terminal, and reduces a delay of transmitting the information used to indicate a system message modification status.

In the foregoing embodiments provided in this application, in a possible design, a possible implementation in which the first signal further includes information used to indicate a system message modification status is:
the original information carried in the first signal includes at least one second bit group, and each second bit group is used to indicate one system message modification status.

In the foregoing embodiments provided in this application, in a possible design, a possible implementation in which the first signal further includes information used to indicate a modification status of the terminal device and information used to indicate a system message modification status is: The first signal is a second sequence, the second sequence is a sequence that is in a second sequence set and that is corresponding to the system message modification status and an actual paging status of the at least one terminal device identified by the at least one terminal device identifier, the second sequence set includes at least one sequence, and each sequence is used to indicate one system message modification status and one paging status of the at least one terminal device identified by the at least one terminal device identifier.

In the foregoing embodiments provided in this application, in a possible design, the first signal includes at least one first sub-signal, each first sub-signal in the at least one first sub-signal is corresponding to at least one terminal device identifier group, the terminal device identifier group includes at least one terminal device identifier, and each first sub-signal is used to indicate a paging status of a terminal device identified by a terminal device identifier included in the at least one terminal device identifier group corresponding to the first sub-signal.

In this manner, different first sub-signals in the first signal indicate paging statuses of different terminal devices. In this way, a paging indication function of the first signal is refined, so that the terminal device needs to receive only a corresponding first sub-signal. This further reduces power consumption of the terminal device, and increases resource utilization.

In the foregoing embodiments provided in this application, in a possible design, the first parameter includes the at least one terminal device identifier included in the at least one terminal device identifier group corresponding to each first sub-signal in the at least one first sub-signal; and the at least one terminal device identifier included in the at least one terminal device identifier group is used to indicate a resource location of the first sub-signal corresponding to the at least one terminal device identifier group.

In the foregoing embodiments provided in this application, in a possible design, a possible implementation in which the first sub-signal is corresponding to at least one terminal device identifier group is: Original information carried in the first sub-signal includes at least one first bit group, and each first bit group is corresponding to one terminal device identifier included in the at least one terminal device identifier group.

In the foregoing embodiments provided in this application, in a possible design, when the first sub-signal is corresponding to at least one terminal device identifier group, a possible implementation in which the first sub-signal is used to indicate a paging status of at least one terminal device identified by the terminal device identifier included in the at least one terminal device identifier group is:
the first sub-signal is a target sequence, the target sequence is a sequence that is in a sequence set corresponding to the at least one terminal device identifier group and that is corresponding to an actual paging status of the at least one terminal device identified by the at least one terminal device identifier included in the at least one terminal device identifier group, the sequence set includes at least one sequence, and one sequence is used to indicate one paging status of the at least one terminal device identified by the at least one terminal device identifier included in the at least one terminal device identifier group.

Specifically, in this possible implementation, the at least one terminal device identifier group is the at least one terminal device identifier group corresponding to the first sub-signal, and each of the at least one terminal device identifier group corresponding to the first sub-signal is corresponding to one sequence set.

In the foregoing embodiments provided in this application, in a possible design, when the first signal includes at least one first sub-signal, a possible implementation in which the first signal further includes information used to indicate a system message modification status is:
in the foregoing embodiments provided in this application, in a possible design, each first sub-signal in the at least one first sub-signal further includes the information used to indicate a system message modification status.

In the foregoing embodiments provided in this application, in a possible design, when the first signal includes at least one first sub-signal, another possible implementation in which the first signal further includes information used to indicate a system message modification status is:
some first sub-signals in the at least one first sub-signal further include the information used to indicate a system message modification status.

It should be noted that in specific implementation, a possible implementation in which the first sub-signal further includes information used to indicate a system message modification status is similar to a possible implementation in which the first signal includes information used to indicate a system message modification status, and details are not described herein.

In the foregoing embodiments provided in this application, in a possible design, a possible implementation in which the first parameter includes information used to indicate a resource location of the first signal is:
the first parameter includes at least one of time resource location indication information and frequency resource location indication information.

In addition, the first parameter may further include other indication information other than the indication information used to indicate the resource location of the first signal, for example, include at least one of: a terminal device identifier, modulation and coding scheme indication information, signal length/signal size indication information, coverage level indication information, repetition quantity indication information, and indication information of a correspondence rule between the first signal and the terminal device identifier.

In the foregoing embodiments provided in this application, in a possible design, the resource location of the first signal may be determined by using only the first parameter, or may be determined by using the first parameter and another parameter.

In the foregoing embodiments provided in this application, in a possible design, a possible implementation in which the first signal is used to indicate a paging status of the terminal device is: if the first signal is corresponding to at least one terminal device identifier, and the first signal is used to indicate a paging status of at least one terminal device identified by the at least one terminal device identifier, the terminal device determines the paging status of the terminal device based on the first signal and a terminal device identifier identifying the terminal device.

The first signal is corresponding to the terminal device identifier, and therefore the terminal device can determine the paging status of the terminal device based on the terminal device identifier after receiving the first signal. This improves efficiency of determining the paging status of the terminal device by the terminal device based on the first signal.

In addition, in the foregoing embodiments, an entity device corresponding to the processing module may be a processor, an entity device corresponding to the sending module may be a transmitter, and an entity device corresponding to the receiving module may be a receiver.

According to another aspect, an embodiment of this application provides a communications system, including the terminal device and the network device described in the foregoing aspects.

According to another aspect, an embodiment of the present invention provides a computer storage medium, configured to store a computer software instruction used by the foregoing base station. The computer software instruction includes a program designed for performing the foregoing aspects.

According to another aspect, an embodiment of the present invention provides a computer storage medium, configured to store a computer software instruction used by the foregoing UE. The computer software instruction includes a program designed for performing the foregoing aspects.

### DESCRIPTION OF DRAWINGS

FIG. 1a to FIG. 1c each are a schematic flowchart of a signal transmission method according to an embodiment of this application;
FIG. 2a to FIG. 2c each are a schematic diagram of sending a first signal according to an embodiment of this application;
FIG. 3 is a schematic diagram of sending a first signal by using a subframe according to an embodiment of this application;
FIG. 4 is a schematic diagram of a resource location used for sending a first sub-signal according to an embodiment of this application;
FIG. 5a and FIG. 5b each are a schematic diagram of a resource location used for sending a first sub-signal according to an embodiment of this application;
FIG. 6a to FIG. 6c are schematic diagrams of different cases of a resource location used for sending a first sub-signal according to an embodiment of this application;
FIG. 7a and FIG. 7b are schematic diagrams of different cases of a resource location used for sending a first signal according to an embodiment of this application;
FIG. 8a is a schematic structural diagram of a base station according to an embodiment of this application;
FIG. 8b is a schematic structural diagram of hardware of a base station according to an embodiment of this application;
FIG. 9a is a schematic structural diagram of a base station according to an embodiment of this application;
FIG. 9b is a schematic structural diagram of hardware of a base station according to an embodiment of this application;
FIG. 10a is a schematic structural diagram of a terminal device according to an embodiment of this application;
FIG. 10b is a schematic structural diagram of hardware of a terminal device according to an embodiment of this application;
FIG. 11a is a schematic structural diagram of a terminal device according to an embodiment of this application;
FIG. 11b is a schematic structural diagram of hardware of a terminal device according to an embodiment of this application;
FIG. 12 is a schematic structural diagram of a communications system according to an embodiment of this application; and
FIG. 13 is a schematic structural diagram of a communications system according to an embodiment of this application.

### DESCRIPTION OF EMBODIMENTS

The term "and/or" in the embodiments of this application describes only an association relationship for describing associated objects and indicates that three relationships may exist. For example, A and/or B may indicate the following three cases: Only A exists, both A and B exist, and only B exists. In addition, the character "/" in the embodiments of this application generally indicates an "or" relationship between the associated objects.

The following further describes the embodiments of this application in detail with reference to drawings of this specification.

It should be understood that a paging method in the embodiments of this application is applicable to a long term evolution (Long Term Evolution, LTE) system such as an NB-IoT system. In addition, the paging method in the embodiments of this application may also be applicable to other wireless communications systems such as a global system for mobile communications (Global System for Mobile Communications, GSM), a universal mobile telecommunications system (Universal Mobile Telecommunications System, UMTS), a code division multiple access (Code Division Multiple Access, CDMA) system, and a new network system.

A base station in the embodiments of this application may be configured to perform mutual conversion between a received over-the-air frame and an Internet protocol (Internet Protocol, IP) packet and serve as a router between a wireless terminal device and a remaining part of an access network, where the remaining part of the access network may include an IP network. In addition, the base station in the embodiments of this application may further coordinate attribute management of an air interface. For example, the base station in the embodiments of this application may be a base transceiver station (Base Transceiver Station, BTS) in a global system for mobile communications (Global System for Mobile Communications, GSM) or code division multiple access (Code Division Multiple Access, CDMA), may be a NodeB (NodeB) in wideband code division multiple access (Wideband Code Division Multiple Access, WCDMA), or may be an evolved NodeB (evolutional NodeB, eNB, or eNodeB) in LTE. This is not limited in the embodiments of this application.

A terminal device in the embodiments of this application may be a device that provides a user with voice and/or data connectivity, a handheld device with a wireless connection function, or another processing device connected to a wireless modem. The terminal device may alternatively be a wireless terminal device. The wireless terminal device may communicate with one or more core networks by using a radio access network (Radio Access Network, RAN). The wireless terminal device may be a mobile terminal device such as a mobile phone (also referred to as a "cellular" phone) or a computer with a mobile terminal device. The computer with a mobile terminal device, for example, may be a portable, pocket-sized, handheld, computer built-in, or in-vehicle mobile apparatus, which exchanges voice and/or data with the radio access network. For example, the wireless terminal device may alternatively be a device such as a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal device may also be called a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a user device (User Device), user equipment (User Equipment, UE), or the like.

A network device in the embodiments of the present invention may be a base station or an access point, or may be a device that is in an access network and communicates, over an air interface, with a wireless terminal by using one or more sectors. The base station may be configured to perform mutual conversion between a received over-the-air frame and an IP packet and serve as a router between the wireless terminal and a remaining part of the access network, where the remaining part of the access network may include an Internet protocol (IP) network. The base station may also coordinate attribute management of the air interface. For example, the base station may be a base transceiver station (BTS, Base Transceiver Station) in GSM or CDMA, may be a NodeB (NodeB) in WCDMA, or may be an evolved NodeB (eNB or e-NodeB, evolutional NodeB) in LTE. This is not limited in this application.

For ease of description, the network device in the embodiments of the present invention is described by using a base station as an example. This is merely an example in the embodiments of the present invention, and the present invention includes but is not limited thereto.

In the embodiments of this application, after determining a first parameter, the base station notifies the terminal device of a part or all of the first parameter by using a system message and/or higher layer signaling, or the first parameter is pre-configured on the base station and the terminal device, so that after the base station sends a first signal to the terminal device based on the first parameter, the terminal device can directly receive the first signal based on the first parameter, and determine a paging status of the terminal device based on the first signal. Compared with a prior-art paging mechanism, the terminal device does not need to monitor a PDCCH used for scheduling a paging indication message each time after waking up. Therefore, power consumption caused when the terminal device obtains the paging indication message is reduced to some extent, and a service life of a battery in the terminal device is prolonged.

It should be understood that the system message is usually sent through a broadcast channel. The system message does not change in a relatively long time period. Therefore, when the base station notifies the terminal device of the first parameter by using the system message, the terminal device does not need to monitor the broadcast channel each time before receiving the first signal to update the first parameter.

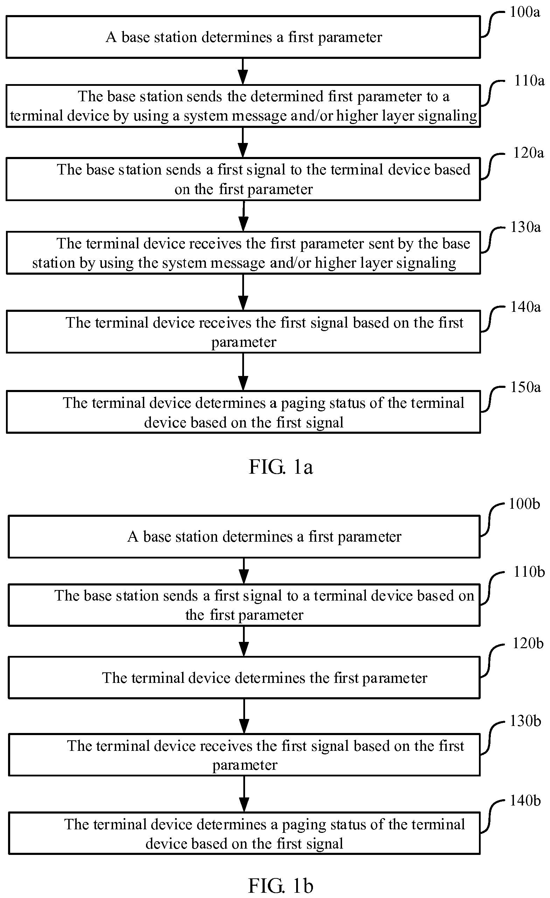

When the first parameter is notified to the terminal by using the system message and/or higher layer signaling, as shown in FIG. 1a, a signal transmission method according to an embodiment of this application includes the following steps.
Step 100a: A base station determines a first parameter, where the first parameter includes information used to indicate a resource location of a first signal.
Step 110a: The base station sends the determined first parameter to a terminal device by using a system message and/or higher layer signaling.
Step 120a: The base station sends the first signal to the terminal device based on the first parameter, where the first signal is used to indicate a paging status of the terminal device.
Step 130a: The terminal device receives the first parameter sent by the base station by using the system message and/or higher layer signaling.
Step 140a: The terminal device receives the first signal based on the first parameter.
Step 150a: The terminal device determines the paging status of the terminal device based on the first signal.

It should be specially emphasized that there is no sequence for performing step 120a and step 110a.

In the signal transmission method shown in FIG. 1a, the first parameter is notified to the terminal device by using the system message and/or higher layer signaling. In specific implementation, the base station may notify the terminal device of the first parameter by using the system message. For example, the base station may notify the terminal device of a part of information in the first parameter by using a master information block (Master Information Block, MIB), and notify the terminal device of a remaining part of information in the first parameter by using a system information block (System Information Block, SIB). Alternatively, the base station notifies the terminal device of the first parameter by using an SIB or an MIB. Alternatively, the base station may notify the terminal device of the first parameter by using the higher layer signaling, where the higher layer signaling is, for example, radio resource control (Radio Resource Control, RRC) signaling or another type of signaling at a higher layer. Alternatively, the base station may notify the terminal device of a part of information in the first parameter by using the system message, and notify the terminal device of a remaining part of information in the first parameter by using the higher layer signaling. In this embodiment of this application, it is not limited that the first parameter is divided into two parts to be notified to the terminal device, that is, the first parameter may alternatively be divided into a plurality of parts to be notified to the terminal device. Certainly, in specific implementation, the first parameter may be notified to the terminal device once by using the system message, and may also be notified to the terminal once again by using the higher layer signaling. This is not limited herein.

In addition, the base station may determine the first parameter based on pre-configured information and according to a policy pre-agreed on with the terminal.

In step 120a, the base station sends the first signal to the terminal device based on the first parameter. For example, after determining the first signal, the base station sends the first signal to the terminal device based on the first parameter. It should be understood that the base station may determine the first signal based on an actual paging status of the terminal device.

As shown in FIG. 1b, an embodiment of this application further provides a signal transmission method, including the following steps.
Step 100b: A base station determines a first parameter, where the first parameter includes information used to indicate a resource location of a first signal.
Step 110b: The base station sends the first signal to a terminal device based on the first parameter, where the first signal is used to indicate a paging status of the terminal device.
Step 120b: The terminal device determines the first parameter.
Step 130b: The terminal device receives the first signal based on the first parameter.
Step 140b: The terminal device determines the paging status of the terminal device based on the first signal.

It should be understood that, in the signal transmission method shown in FIG. 1b, step 120b may be performed before step 100b and step 110b, and a sequence for performing step 100b, step 110b, and step 120b is not limited herein.

For example, the base station and the terminal device may separately determine the first parameter based on pre-configured information and according to a same policy. For example, the first parameter may be pre-configured on the base station and the terminal device.

For example, the pre-configured information may be a terminal device identifier. Because various terminal device identifiers are stored on the base station, and a terminal device identifier of the terminal device is usually stored on the terminal device, provided that a calculation policy of the first parameter is pre-agreed on between the base station and the terminal device, the base station and the terminal device may separately determine the first parameter, and the base station does not need to send the first parameter to the terminal device.

For example, the first parameter is pre-configured on the base station and the terminal device. When the base station needs to send the first signal to the terminal device, the base station may search for and determine the first parameter in configured parameters, and then the base station sends the first signal based on the first parameter. When the terminal needs to receive the first signal sent by the base station, the terminal may search for and determine the first parameter in configured parameters, and the terminal receives the first signal based on the first parameter.

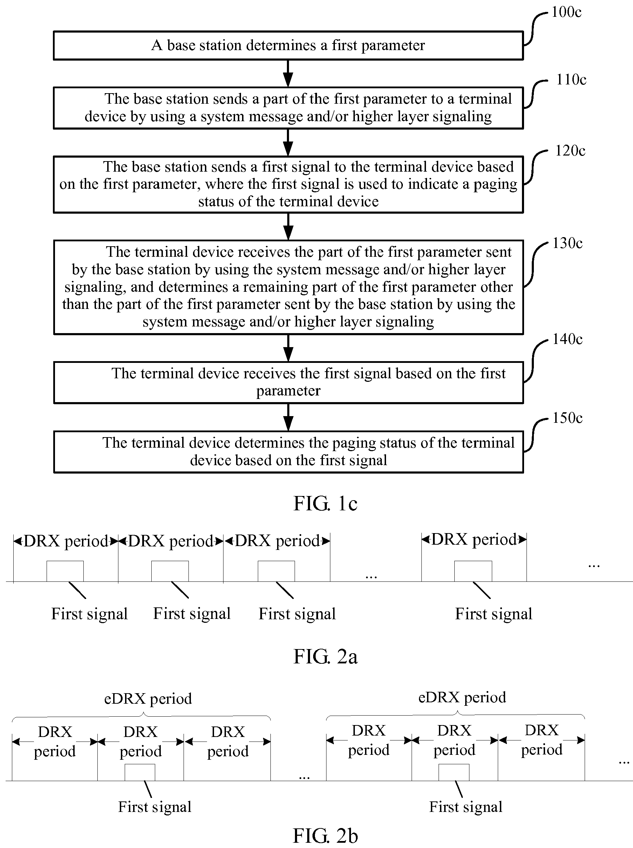

As shown in FIG. 1c, an embodiment of this application further provides a signal transmission method, including the following steps.
Step 100c: A base station determines a first parameter, where the first parameter includes information used to indicate a resource location of a first signal.
Step 110c: The base station sends a part of the first parameter to a terminal by using a system message and/or higher layer signaling.
Step 120c: The base station sends the first signal to the terminal device based on the first parameter, where the first signal is used to indicate a paging status of the terminal device.
Step 130c: The terminal device receives the part of the first parameter sent by the base station by using the system message and/or higher layer signaling, and determines a remaining part of the first parameter other than the received part of the first parameter sent by the base station by using the system message and/or higher layer signaling.
Step 140c: The terminal device receives the first signal based on the first parameter.
Step 150c: The terminal device determines the paging status of the terminal device based on the first signal.

In step 100c, the base station determines the first parameter, and may determine the part of the first parameter based on configuration information and according to a preset policy. The remaining part of the first parameter is pre-configured on the terminal device and the base station, and does not need to be calculated.

A manner, shown in FIG. 1c, in which the terminal device determines that the part of the first parameter is notified to the terminal device by using the system message and/or higher layer signaling may be similar to a manner, shown in FIG. 1b, in which the first parameter is notified to the terminal device by using the system message and/or higher layer signaling, and details are not described herein.

In addition, in the signal transmission methods shown in FIG. 1a to FIG. 1c, the paging status of the terminal device may refer to whether the base station pages the terminal device. For example, when the base station pages the terminal device, the first signal is used to indicate that the terminal device is paged by the base station; when the base station does not page the terminal device, the first signal is used to indicate that the terminal device is not paged by the base station. In addition, in the first signal, some signals used to indicate some terminal device identifiers may be absent at resource locations corresponding to the signals, indicating that terminal devices identified by the terminal device identifiers are not paged by the base station.

It should be noted that, in the signal transmission methods shown in FIG. 1a to FIG. 1c, the first parameter may include a parameter used to determine the resource location of the first signal. For example, the first parameter may include at least one of time resource location indication information or frequency resource location indication information. The time resource location indication information is used to determine a time domain resource location of the first signal, and may include one or more pieces of indication information. The frequency resource location indication information is used to determine a frequency domain resource location of the first signal, and may also include one or more pieces of indication information. Specifically, in a possible implementation method, the first signal may be periodically sent, and in this case, the time resource location indication information may include period indication information used to indicate a sending period of the first signal. Alternatively, the time resource location indication information may include a periodic offset indication parameter used to indicate a relative resource location of the first signal in one period. In another possible implementation method, the first signal is sent in each discontinuous reception (Discontinuous Reception, DRX) period or is sent in some DRX periods, and in this case, the time resource location indication information includes indication information used to indicate a resource location of the first signal in the DRX period. For example, when the first signal is periodically sent in one DRX period, the time resource location indication information includes at least one of: indication information used to indicate a sending period of the first signal in the DRX period, indication information used to indicate a quantity of contiguous resource blocks occupied by the first signal in the DRX period, and indication information used to indicate a size of a contiguous resource block occupied by the first signal in the DRX period. The resource location of the first signal in the DRX period may include at least one contiguous resource block. For example, the contiguous resource block may be at least one OFDM symbol, at least one slot, at least one subframe, at least one radio frame, or the like. In still another possible implementation method, the first signal may be sent on at least one carrier, and in this case, the frequency domain resource location indication information includes indication information used to indicate a carrier identifier or a carrier frequency of the at least one carrier. For example, one carrier may be a 180 kHz bandwidth in frequency domain, and the carrier identifier may be a relative/absolute number of the carrier or a number determined according to a specific rule, or the like.

All types of indication information in this embodiment of this application are not limited to including only one indication parameter, that is, one piece of indication information may include at least one indication parameter. For example, the indication information used to indicate the carrier identifier or the carrier frequency of the at least one carrier may include a plurality of carrier identifiers or a plurality of carrier frequencies. Another type of indication information also supports such a similar feature, and details are not described herein.

In a possible implementation method, the first parameter may further include other indication information other than the indication information used to indicate the resource location of the first signal, for example, include at least one of: a terminal device identifier, modulation and coding scheme indication information, signal length/signal size indication information, coverage level indication information, repetition quantity indication information, and indication information of a correspondence rule between the first signal and the terminal device identifier. The modulation and coding scheme indication information is used to indicate a modulation scheme and/or a bit rate of a first signal or modulation schemes and/or bit rates of some signals in the first signal. The signal length/signal size indication information is used to indicate signal duration and/or a signal packet size of the first signal or signal duration and/or signal packet sizes of some signals in the first signal. The coverage level indication information is used to indicate a coverage level of the first signal or coverage levels of some signals in the first signal, or another parameter (such as a maximum repetition quantity) equivalent to the coverage level. The repetition quantity indication information is used to indicate a repetition quantity of the first signal or repetition quantities of some signals in the first signal. The indication information of the correspondence rule between the first signal and the terminal device identifier is used to indicate a correspondence rule between the first signal or some signals in the first signal and the terminal device identifier, and the correspondence rule may include at least one of signal content and a signal resource location.

For example, in this embodiment of this application, the resource location of the first signal may be determined by using only the first parameter.

The following specifically describes how the first signal indicates the paging status of the terminal device, and the following manner in which the first signal may be used to indicate the paging status of the terminal device is applicable to the signal transmission methods shown in FIG. 1a and FIG. 1b.

To facilitate determining of the paging status of the terminal device by the terminal device based on the first signal, the first signal is corresponding to the terminal device identifier, and the first signal is used to indicate a paging status of at least one terminal device identified by the terminal device identifier. It should be understood that the first signal may be corresponding to one terminal device identifier, or the first signal may be corresponding to a plurality of terminal device identifiers.

### Embodiment 1

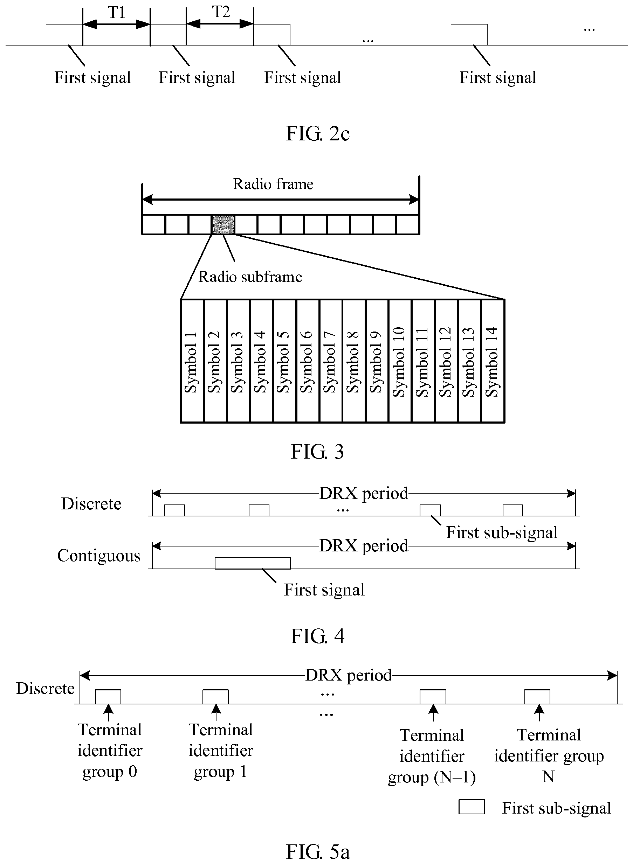

The first signal may be sent once at an interval of DRX as shown in FIG. 2a, may be sent once at an interval of eDRX as shown in FIG. 2b, or may be sent once at an interval of preset duration as shown in FIG. 2c. The preset duration is preset and is duration independently configured by the base station for the first signal, and interval duration between every two adjacent first signals in the plurality of first signals may be the same or different, for example, T1 and T2 shown in FIG. 2c may be the same or different.

When the first signal is corresponding to at least one terminal device identifier, a possible implementation is:
original information carried in the first signal includes at least one first bit group, and each first bit group is corresponding to one terminal device identifier in the at least one terminal device identifier.

In this possible implementation, each first bit group in the at least one first bit group includes at least one bit. For example, the original information carried in the first signal includes three first bit groups, namely, a first bit group 1, a first bit group 2, and a first bit group 3. The first bit group 1 is used as an example. The first bit group 1 may include one bit or may include a plurality of bits. It should be noted that quantities of bits included in the first bit group 1, the first bit group 2, and the first bit group 3 may be the same or different. For example, the first bit group 1 includes one bit, the first bit group 2 includes three bits, and the first bit group 3 includes three bits.

It should be understood that the original information is represented in a form of a bit, and the original information is encoded and modulated to form the first signal.

In a possible implementation, one first bit group is used to represent one terminal device identifier. For example, when the original information carried in the first signal includes three first bit groups, where one first bit group is a binary representation of a terminal device identifier 1, one first bit group is a binary representation of a terminal device identifier 2, and one first bit group is a binary representation of a terminal device identifier 3, the first signal is used to indicate that a terminal device identified by the terminal device identifier 1, a terminal device identified by the terminal device identifier 2, and a terminal device identified by the terminal device identifier 3 are paged by the base station or are not paged by the base station. In addition, in another possible implementation, the first bit group may alternatively include only one bit, and each first bit group is corresponding to one terminal device identifier. For example, when the first signal is corresponding to N terminal device identifiers, the original information carried in the first signal includes N first bit groups, where each first bit group is corresponding to one terminal device identifier, and each first bit group is corresponding to a different terminal device identifier. For example, when a first bit group in the N first bit groups is corresponding to the terminal device identifier 1, and the first bit group includes only a bit 1, it indicates that the terminal device identified by the terminal device identifier 1 is paged by the base station. When another first bit group in the N first bit groups is corresponding to the terminal device identifier 2, and the first bit group includes only a bit 0, it indicates that the terminal device identified by the terminal device identifier 2 is not paged by the base station. In another possibility, when another first bit group in the N first bit groups is corresponding to the terminal device identifier 2, and the terminal device identified by the terminal device identifier 2 is not paged by the base station, the first bit group corresponding to the terminal device identifier 2 may be empty, that is, there is no bit information. In this embodiment of this application, a specific quantity of bits in the first bit group is not limited.

As shown in FIG. 3, a subframe is used for sending a first signal. The first signal includes M bit groups, and each bit group includes one bit. Therefore, if each bit group is corresponding to one terminal device identifier, the first signal in the subframe can be used to indicate paging statuses of terminal devices identified by a maximum of 26 terminal device identifiers.

In another possible implementation, the first signal is a first sequence, the first sequence is a sequence that is in a first sequence set and that is corresponding to an actual paging status of the at least one terminal device identified by the at least one terminal device identifier, the first sequence set includes at least one sequence, and each sequence is used to indicate one paging status of the at least one terminal device identified by the at least one terminal device identifier.

Generally, paging statuses, indicated by all sequences in the first sequence set, of the at least one terminal device identified by the at least one terminal device identifier are different from each other.

For example, when the first signal is corresponding to the terminal device identifier 1, the terminal device identifier 2, and the terminal device identifier 3, there may be eight paging statuses of terminal devices respectively identified by the terminal device identifier 1, the terminal device identifier 2, and the terminal device identifier 3. In this case, when the first sequence is used to indicate the paging statuses of the terminal devices respectively identified by the terminal device identifier 1, the terminal device identifier 2, and the terminal device identifier 3, the first sequence set including 8 (2×2×2=8) sequences needs to be preset, and each sequence in the first sequence set is used to indicate one of the paging statuses of the terminal devices respectively identified by the terminal device identifier 1, the terminal device identifier 2, and the terminal device identifier 3. The first sequence is a sequence corresponding to one of actual paging statuses of the terminal devices respectively identified by the terminal device identifier 1, the terminal device identifier 2, and the terminal device identifier 3.

For example, the first sequence may occupy one or more orthogonal frequency division multiplexing (Orthogonal Frequency Division Multiplexing, OFDM) symbols. The first sequence may be a sequence constituted by 1 and/or -1; the first sequence may be a pseudo random sequence, Hard code, a discrete Fourier transform (Discrete Fourier Transform, DFT) sequence, or Walsh code, or the like, or may be a sequence constituted by some elements of the foregoing type of sequence; the first sequence may be a sequence constituted by a general complex number; or the first sequence may be a ZC sequence, or the like.

In this way, compared with a case in which the base station notifies the terminal device of the paging status by scheduling a PDCCH, this embodiment of this application is conducive to reducing power consumption and delay of the terminal device.

In a possible implementation, the first signal is further used to indicate a system message modification status.

For example, when the original information carried in the first signal includes the paging status, indicated by the at least one first bit group, of the terminal device, the system message modification status may further be indicated by using at least one second bit group included in the original information carried in the first signal. Specifically, the original information carried in the first signal includes at least one second bit group, and each second bit group is used to indicate one system message modification status.

It should be understood that the second bit group may include one bit, or may include a plurality of bits. For example, the original information carried in the first signal includes two second bit groups, namely, a second bit group 1 and a second bit group 2. The second bit group 1 is used to indicate a system message modification status, and the second bit group 2 is used to indicate another system message modification status. For example, the second bit group 1 may include one bit, and the second bit group 2 includes two bits; or both the second bit group 1 and the second bit group 2 include one bit, or both the second bit group 1 and the second bit group 2 include two bits. A quantity of bits in the second bit group is not limited in this embodiment of this application.

It should be noted that, during communication, there may be a plurality of system message modification statuses, for example, a system message modification status in a modification period and a system message modification status in an eDRX period.

For example, a sequence may also be used to indicate a system message modification status when indicating a paging status of the terminal device. Specifically, the first signal is a second sequence, the second sequence is a sequence that is in a second sequence set and that is corresponding to the system message modification status and an actual paging status of a terminal device identified by the at least one terminal device identifier, the second sequence set includes at least one sequence, and each sequence in the at least one sequence is used to indicate one system message modification status and one paging status of the at least one terminal device identified by the at least one terminal device identifier.

Generally, system message modification statuses and paging statuses, indicated by all sequences in the second sequence set, of the at least one terminal device identified by the at least one terminal device identifier are different from each other.

For example, when the first signal is corresponding to the terminal device identifier 1, the second sequence set includes a sequence 1, a sequence 2, a sequence 3, and a sequence 4. The sequence 1 is used to indicate that the terminal device identified by the terminal device identifier 1 is paged by the base station, and indicate a status that the system message changes. The sequence 2 is used to indicate that the terminal device identified by the terminal device identifier 1 is paged by the base station, but indicate a status that the system message does not change. The sequence 3 is used to indicate that the terminal device identified by the terminal device identifier 1 is not paged by the base station, but indicate a status that the system message changes. The sequence 4 is used to indicate that the terminal device identified by the terminal device identifier 1 is not paged by the base station, and indicate a status that the system message does not change. When the first signal is corresponding to a plurality of terminal device identifiers, and/or when the system message modification status includes a plurality of possibilities, a quantity of sequences in the second sequence set may be increased to indicate paging statuses of different terminal devices and system message modification statuses. In addition, it should be noted that the second sequence set may not include a sequence used to indicate that none of terminal devices identified by terminal device identifiers corresponding the first signal is paged by the base station and the system message does not change.

### Embodiment 2

The first signal includes at least one first sub-signal, each first sub-signal in the at least one first sub-signal is corresponding to at least one terminal device identifier group, the terminal device identifier group includes at least one terminal device identifier, and each first sub-signal is used to indicate a paging status of a terminal device identified by a terminal device identifier included in the at least one terminal device identifier group corresponding to the first sub-signal.

In specific implementation, the following manner may be used to implement that each first sub-signal in the at least one first sub-signal is corresponding to at least one terminal device identifier group. In a possible implementation, original information carried in the first sub-signal includes at least one bit group, and each bit group is corresponding to one terminal device identifier included in the at least one terminal device identifier group.

For example, one bit group includes at least one bit. For example, one bit group may include one bit, or may include a plurality of bits. It is assumed that the original information carried in the first sub-signal includes two bit groups, namely, a bit group 1 and a bit group 2, and a quantity of bits included in the bit group 1 may be the same as or different from a quantity of bits included in the bit group 2.

For example, if one bit group is corresponding to one terminal device identifier group, the bit group may be used to represent all terminal device identifiers included in one terminal device group. For example, at least one bit in the bit group is corresponding to a binary representation of one terminal device identifier. In another possible implementation, the bit group may alternatively include at least one bit. For example, each bit is corresponding to a paging status of a terminal device identified by one terminal device identifier. In this implementation, a quantity of bits included in the bit group is the same as a quantity of terminal device identifiers included in the terminal device identifier group.

In another possible implementation, the first sub-signal is a target sequence, the target sequence is a sequence that is in a sequence set corresponding to the at least one terminal device identifier group and that is corresponding to an actual paging status of the at least one terminal device identified by the at least one terminal device identifier included in the at least one terminal device identifier group, the sequence set includes at least one sequence, and one sequence is used to indicate one paging status of the at least one terminal device identified by the at least one terminal device identifier included in the at least one terminal device identifier group. This implementation method is similar to the method in which the first signal is the first sequence, and details are not described herein.

For example, the first signal includes two first sub-signals, namely, a first sub-signal 1 and a first sub-signal 2, where the first sub-signal 1 is corresponding to a terminal device identifier group 1 and a terminal device identifier group 2, and the first sub-signal 2 is corresponding to a terminal device identifier group 3. The first sub-signal 1 is a target sequence 1, the target sequence 1 is a sequence that is in a sequence set 1 and that is corresponding to an actual paging status of at least one terminal device identified by at least one terminal device identifier included in the terminal device identifier group 1 and the terminal device identifier group 2, the sequence set 1 is corresponding to the terminal device identifier group 1 and the terminal device identifier group 2, and each sequence in at least one sequence included in the sequence set 1 is used to indicate one paging status of the at least one terminal device identified by the at least one terminal device identifier included in the terminal device identifier group 1 and the terminal device identifier group 2. The first sub-signal 2 is a target sequence 2, the target sequence 2 is a sequence that is in a sequence set 2 and that is corresponding to an actual paging status of at least one terminal device identified by at least one terminal device identifier included in the terminal device identifier group 3, the sequence set 2 is corresponding to the terminal device identifier group 3, and each sequence in at least one sequence included in the sequence set 2 is used to indicate one paging status of the at least one terminal device identified by the at least one terminal device identifier included in the terminal device identifier group 3.

For example, when the first signal includes at least one first sub-signal, the first parameter includes the at least one terminal device identifier included in the at least one terminal device identifier group corresponding to each first sub-signal in the at least one first sub-signal, and the at least one terminal device identifier included in the at least one terminal device identifier group is used to indicate a resource location of the first sub-signal corresponding to the at least one terminal device identifier group.

For example, the first signal includes a first sub-signal 1 and a first sub-signal 2, where the first sub-signal 1 is corresponding to the terminal device identifier group 1, and the first sub-signal 2 is corresponding to the terminal device identifier group 2. In this case, at least one terminal device identifier included in the terminal device identifier group 1 included in the first parameter is used to indicate a resource location of the first sub-signal 1, and at least one terminal device identifier included in the terminal device identifier group 2 included in the first parameter is used to indicate a resource location of the second sub-signal 2.

Resources used for sending all first sub-signals in the at least one first sub-signal included in the first signal may be contiguous or discrete, because the first signal may be sent once at an interval of DRX, may be sent once at an interval of eDRX, or may be sent once at an interval of preset duration. When the first signal is sent once at an interval of DRX, as shown in FIG. 4, in one DRX period, a resource location of the at least one first sub-signal included in the first signal on one carrier may be contiguous in time domain or may be discrete in time domain. When the at least one first sub-signal included in the first signal occupies a subset of contiguous resources in a DRX period, locations and resource sizes (duration) of the contiguous resources in the DRX period may be configured by a base station, and the base station may notify the terminal device of configuration information (for example, the locations and the resource sizes of the contiguous resources in the DRX period) by using a system message or another type of higher layer signaling (for example, RRC signaling). When the at least one first sub-signal included in the first signal occupies a plurality of subsets of contiguous resources (that is, in discrete distribution) in a DRX period, the plurality of subsets of contiguous resources may be evenly distributed, to be specific, time intervals between two adjacent contiguous resources are the same, or may be not evenly distributed, that is, intervals between adjacent contiguous resources may be different. Sizes/duration of different contiguous resources may be the same, for example, all are several symbols, several subframes, or several radio frames; or may be different, for example, some contiguous resources may be several symbols, and other contiguous resources may have different sizes from those of the some contiguous resources.

In addition, it should be noted that when none of terminal devices identified by terminal device identifiers in a terminal device identifier group corresponding to one of the first sub-signals in the first signal is paged by the base station, that is, there is no valid paging on a resource location occupied by the first sub-signal, the base station may not send the first sub-signal at the resource location occupied by the first sub-signal, and the base station may choose to keep the resource location empty. Certainly, for consideration of not wasting resources, another signal may alternatively be carried on the resource location occupied by the first sub-signal.

In a possible implementation, as shown in FIG. 5a, each first sub-signal is corresponding to one terminal device identifier group, and all first sub-signal are distributed on different resources in a discrete manner.

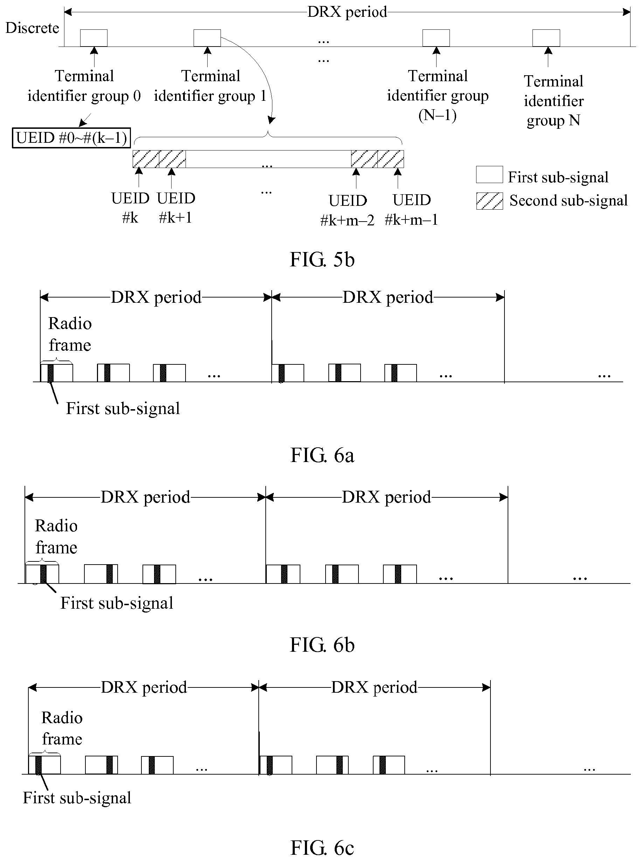

In specific implementation, each first sub-signal may be corresponding to one terminal device identifier group, and each terminal device identifier group includes a plurality of terminal device identifiers. Each first sub-signal includes a plurality of second sub-signals, and each second sub-signal is corresponding to one terminal device identifier in one terminal device identifier group. As shown in FIG. 5b, it is assumed that when a first sub-signal 0 is corresponding to a terminal device identifier group 0, the terminal device identifier group 0 includes k terminal device identifiers that may be denoted as UE ID #0 to UE ID #(k-1); when a first sub-signal 1 is corresponding to a terminal device identifier group 1, the terminal device identifier group 1 includes m UE IDs that may be denoted as UE ID #k to UE ID #(k+m-1); and so on. In this case, each second sub-signal is used to indicate a paging status of a terminal device identified by one terminal device identifier.

In specific implementation, a manner in which the second sub-signal is used to indicate a paging status of a terminal device identified by one terminal device identifier is similar to a manner in which the first sub-signal is used to indicate a paging status of a terminal device identified by at least one terminal device identifier in at least one terminal device identifier group, and details are not described herein.

In specific implementation, the base station may use different resources to carry first sub-signals in each DRX in a mapping manner shown in FIG. 4. Manners of mapping a resource carrying the at least one first sub-signal included in the first signal in all DRX may be the same. For example, when one first sub-signal included in the first signal is sent by using a resource in a different radio frame in each DRX, resource locations of the at least one first sub-signal included in the first signal in all DRX are the same relative to a location of a corresponding radio frame, and resource sizes of the at least one first sub-signal included in the first signal in all DRX are the same, as shown in FIG. 6a. Alternatively, manners of mapping a resource carrying the at least one first sub-signal included in the first signal in all DRX may be different; or manners of mapping a resource carrying the at least one first sub-signal included in the first signal in some DRX are the same, and manners of mapping a resource carrying the at least one first sub-signal included in the first signal in other DRX are different.

In a possible implementation, the base station may configure a resource used to send the first signal to an invalid resource. The invalid resource means that the invalid resource does not carry service data information of the terminal device, but is used for sending some dedicated signals (for example, the first signal in this embodiment of this application). The base station sends the invalid configuration to the terminal device by using a system message. After learning the invalid configuration, the terminal device may automatically avoid these invalid resources when sending and receiving service data.

Certainly, the base station may alternatively not configure the resource for sending the first signal to an invalid resource. Because the information used to indicate the resource location of the first signal may be notified to the terminal device by using the system message and/or higher layer signaling, the terminal device determines the resource location of the first signal by reading the system message and/or the higher layer signaling, and no additional indication is required.

In some deployment scenarios of NB-IoT, locations of first three OFDM symbols of a subframe #0 and first three OFDM symbols of a subframe #5 that are in each radio frame, and first three OFDM symbols of a subframe #9 of an even-number radio frame (that is, a radio frame number is an even number) are all empty, and the first signal in this embodiment of this application may be sent at these resource locations or some of these resource locations. Certainly, the first signal may alternatively be sent at another location. This is not limited herein.

In this embodiment of this application, the first signal may be sent on only one carrier, or may be sent on a plurality of carriers. When the first signal is sent on a plurality of carriers, a first sub-signal on each carrier may be corresponding to one terminal device group, and terminal device identifier groups corresponding to first sub-signals on the plurality of carriers constitute a set of all terminal device identifiers. Certainly, the first sub-signal on each carrier may alternatively be corresponding to all the terminal device identifier groups. On one carrier, the first sub-signal may be sent in a resource mapping manner shown in FIG. 3.

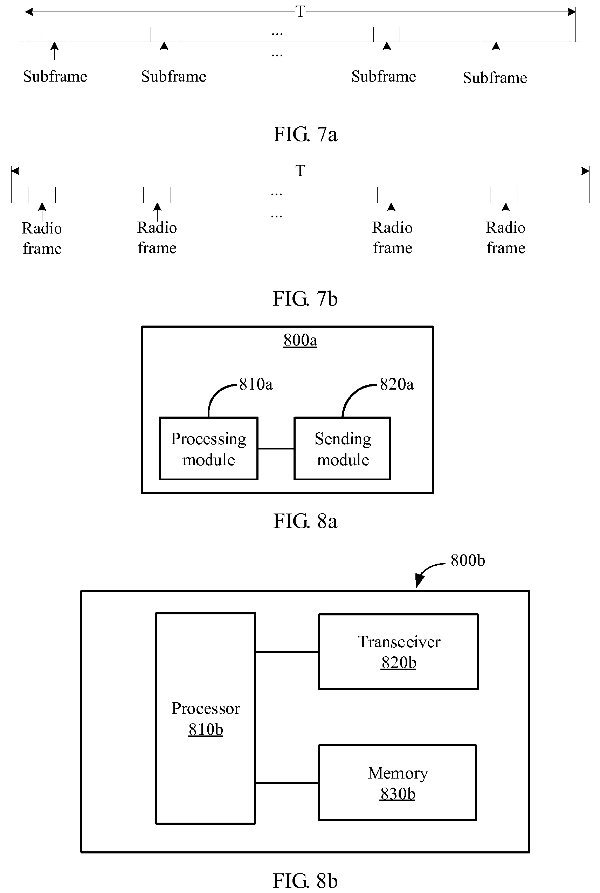

As shown in FIG. 7a, it is assumed that a DRX period is T, and in one DRX period T, the first signal may be mapped in a discrete manner in time domain, for example, sent in a subframe at intervals. Spaces between adjacent subframes may be the same or different. As shown in FIG. 7b, the first signal may alternatively be sent in a radio frame at intervals, and spaces between adjacent radio frames may be the same or different. In this embodiment of this application, the first signal may alternatively be carried on a resource block for sending, and each resource block may be several subframes, several radio frames, or the like. Details are not listed one by one herein.

When the first signal includes at least one first sub-signal, each first sub-signal in the at least one first sub-signal further includes the information used to indicate a system message modification status; or some first sub-signals in the at least one first sub-signal further include the information used to indicate a system message modification status.

For example, the first signal includes a first sub-signal 1 and a first sub-signal 2, and both the first sub-signal 1 and the first sub-signal 2 include the information used to indicate a system message modification status, or the first sub-signal 1 includes the information used to indicate a system message modification status.

When the first signal includes N first sub-signals, one first sub-signal at an interval of several first sub-signals may include the information used to indicate a system message modification status.

In specific implementation, a manner in which the first sub-signal includes the information used to indicate a system message modification status is similar to a manner in which the first signal includes the information used to indicate a system message modification status, and details are not described herein.

For the system message in Embodiment 1 and Embodiment 2, if the terminal device uses only cell DRX, when the DRX is less than a system message modification period (Modification Period, MP), the information used to indicate a system message modification status is information about whether the current system message changes relative to a system message in a previous MP.

If the terminal device uses eDRX greater than the MP, because the eDRX is greater than the MP, and the base station cannot learn an eDRX period value on the terminal device using the eDRX, the information used to indicate a system message modification status is information about whether the system message changes within a longest eDRX period.

In addition, for the first signal in Embodiment 1 and Embodiment 2, the base station may selectively send the first signal in only some DRX. Because terminal devices in a communications system such as LTE/NB-IoT may have their own eDRX period configuration, for the terminal devices configured with eDRX, the terminal devices may not wake up in each DRX period, but wake up in only some DRX periods according to the eDRX configuration of the terminal devices. In this case, the base station may send, to these terminal devices according to the corresponding eDRX configuration, the first signal in only DRX in which the terminal devices wake up, instead of sending the first signal in each DRX.

Based on a same concept, an embodiment of this application further provides a network device, and the network device is configured to perform an action or a function of the network device in the foregoing method embodiment.

Based on a same concept, an embodiment of this application further provides a terminal device, and the terminal device is configured to perform an action or a function of the terminal device in the foregoing method embodiment.

An embodiment of the present invention further provides a communications system, including the network device and the terminal device in the foregoing embodiments.

For brevity, for content of an apparatus part, refer to the foregoing method embodiment. Details are not repeatedly described.

As shown in FIG. 8a, a network device 800a in an embodiment of this application includes a processing module 810a and a sending module 820a. The processing module 810a is configured to determine a first parameter, where the first parameter includes information used to indicate a resource location of a first signal. The sending module 820a is configured to notify, by using a system message and/or higher layer signaling, a terminal device of all or a part of the first parameter determined by the processing module of the terminal device. The sending module 820a is further configured to send the first signal to the terminal device based on the first parameter determined by the processing module, where the first signal is used to indicate a paging status of the terminal device.

In a possible implementation, the first signal is corresponding to at least one terminal device identifier, and the first signal sent by the sending module 820a is used to indicate a paging status of at least one terminal device identified by the at least one terminal device identifier.

In a possible implementation, original information carried in the first signal includes at least one first bit group, and each first bit group is corresponding to one terminal device identifier in the at least one terminal device identifier; or
the first signal is a first sequence, the first sequence is a sequence that is in a first sequence set and that is corresponding to an actual paging status of the at least one terminal device identified by the at least one terminal device identifier, the first sequence set includes at least one sequence, and each sequence is used to indicate one paging status of the at least one terminal device identified by the at least one terminal device identifier.

In a possible implementation, the first signal sent by the sending module further includes information used to indicate a system message modification status.

In a possible implementation, the original information carried in the first signal includes at least one second bit group, and each second bit group is used to indicate one system message modification status; or
the first signal is a second sequence, the second sequence is a sequence that is in a second sequence set and that is corresponding to the system message modification status and an actual paging status of the at least one terminal device identified by the at least one terminal device identifier, the second sequence set includes at least one sequence, and each sequence is used to indicate one system message modification status and one paging status of the at least one terminal device identified by the at least one terminal device identifier.

In a possible implementation, the first signal includes at least one first sub-signal, each first sub-signal in the at least one first sub-signal is corresponding to at least one terminal device identifier group, the terminal device identifier group includes at least one terminal device identifier, and each first sub-signal is used to indicate a paging status of a terminal device identified by a terminal device identifier included in the at least one terminal device identifier group corresponding to the first sub-signal.

In a possible implementation, the first parameter determined by the processing module 810a includes the at least one terminal device identifier included in the at least one terminal device identifier group corresponding to each first sub-signal in the at least one first sub-signal; and the at least one terminal device identifier included in the at least one terminal device identifier group is used to indicate a resource location of the first sub-signal corresponding to the at least one terminal device identifier group.

In a possible implementation, original information carried in the first sub-signal includes at least one first bit group, and each first bit group is corresponding to one terminal device identifier in the at least one terminal device identifier group; or
the first sub-signal is a target sequence, the target sequence is a sequence that is in a sequence set corresponding to the at least one terminal device identifier group and that is corresponding to an actual paging status of at least one terminal device identified by the at least one terminal device identifier included in the at least one terminal device identifier group, the sequence set includes at least one sequence, and each sequence is used to indicate one paging status of the at least one terminal device identified by the at least one terminal device identifier included in the at least one terminal device identifier group.

In a possible implementation, each first sub-signal in the at least one first sub-signal further includes the information used to indicate a system message modification status; or some first sub-signals in the at least one first sub-signal further include the information used to indicate a system message modification status.

In a possible implementation, a possible implementation in which the first parameter determined by the processing module 810a includes information used to indicate a resource location of a first signal is:
the first parameter includes at least one of time resource location indication information and frequency resource location indication information.

In addition, the first parameter may further include other indication information other than the indication information used to indicate the resource location of the first signal, for example, include at least one of: a terminal device identifier, modulation and coding scheme indication information, signal length/signal size indication information, coverage level indication information, repetition quantity indication information, and indication information of a correspondence rule between the first signal and the terminal device identifier.

It should be noted that in this embodiment of this application, the processing module 810a may be implemented by a processor, and the sending module 820a may be implemented by a transceiver. As shown in FIG. 8b, a network device 800b may include a processor 810b, a transceiver 820b, and a memory 830b. The memory 830b may be configured to store a program/code pre-installed by a base station 800b at delivery, or may store code or the like used for execution by the processor 810b.

The processor 810b may use a general-purpose central processing unit (Central Processing Unit, CPU), a microprocessor, an application specific integrated circuit (Application Specific Integrated Circuit, ASIC), or one or more integrated circuits to perform related operations, so as to implement the technical solutions provided in the embodiments of this application.

It should be noted that although only the processor 810b, the transceiver 820b, and the memory 830b in the network device 800b are shown in FIG. 8b, in a specific implementation process, a person skilled in the art should understand that the base station 800b further includes another component required for normal running. In addition, according to a specific requirement, a person skilled in the art should understand that the base station 800b may further include hardware components for implementing other additional functions. Moreover, a person skilled in the art should understand that the base station 800b may include only components or modules essential for implementing this embodiment of this application, but not necessarily include all the components shown in FIG. 8b.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may be a magnetic disk, an optical disc, a read-only memory (Read-Only Memory, ROM), a random access memory (Random Access Memory, RAM), or the like.

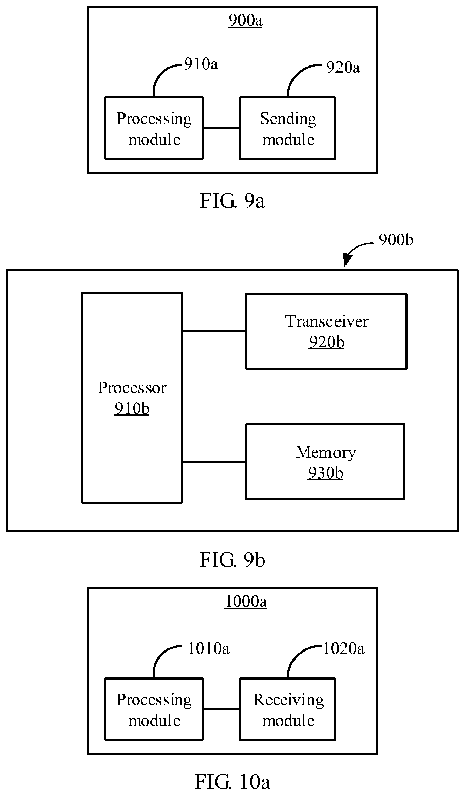

As shown in FIG. 9a, a network device 900a in an embodiment of this application includes a processing module 910a and a sending module 920a. The processing module 910a is configured to determine a first parameter, where the first parameter includes information used to indicate a resource location of a first signal. The sending module 920a is configured to send the first signal to a terminal device based on the first parameter determined by the processing module, where the first signal is used to indicate a paging status of the terminal device.

For all possible implementations of the network device 900a in this embodiment of this application, refer to all the possible implementations of the base station 800a in the embodiments of this application.

It should be noted that in this embodiment of this application, the processing module 910a may be implemented by a processor, and the sending module 920a may be implemented by a transceiver. As shown in FIG. 9b, a base station 900b may include a processor 910b, a transceiver 920b, and a memory 930b. The memory 930b may be configured to store a program/code pre-installed by the base station 900b at delivery, or may store code or the like used for execution by the processor 910b.

The processor 910b may use a general-purpose CPU, a microprocessor, an ASIC, or one or more integrated circuits to perform a related operation, so as to implement the technical solutions provided in the embodiments of this application.

It should be noted that although only the processor 910b, the transceiver 920b, and the memory 930b in the base station 900b are shown in FIG. 9b, in a specific implementation process, a person skilled in the art should understand that the base station 900b further includes another component required for normal running. In addition, according to a specific requirement, a person skilled in the art should understand that the base station 900b may further include hardware components for implementing other additional functions. Moreover, a person skilled in the art should understand that the base station 900b may include only components or modules essential for implementing this embodiment of this application, but not necessarily include all the components shown in FIG. 9b.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may be a magnetic disk, an optical disk, a ROM, a RAM, or the like.

As shown in FIG. 10a, a terminal device 1000a in an embodiment of this application includes a receiving module 1020a and a processing module 1010a. The receiving module 1020a is configured to: receive all or a part of a determined first parameter, where the all or the part of the determined first parameter is notified by a base station to the terminal device by using a system message and/or higher layer signaling, and the first parameter includes information used to indicate a resource location of a first signal; and receive the first signal sent by the base station based on the first parameter, where the first signal is used to indicate a paging status of the terminal device. The processing module 1010a is configured to determine the paging status of the terminal device based on the first signal received by the receiving module.

For all possible implementations of the terminal device 1000a in this embodiment of this application, refer to all the possible implementations of the base station 800a in the embodiments of this application.

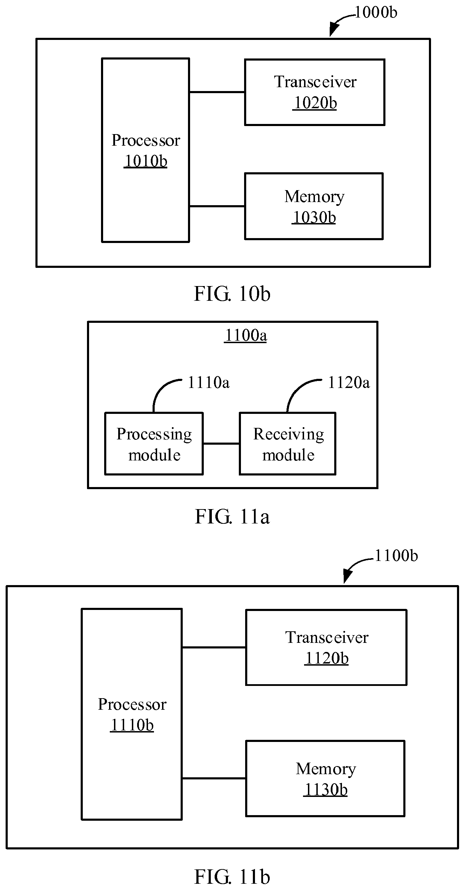

It should be noted that in this embodiment of this application, the processing module 1010a may be implemented by a processor, and the receiving module 1020a may be implemented by a transceiver. As shown in FIG. 10b, a terminal device 1000b may include a processor 1010b, a transceiver 1020b, and a memory 1030b. The memory 1030b may be configured to store a program/code pre-installed by the terminal device 1000b at delivery, or may store code or the like used for execution by the processor 1010b.

The processor 1010b may use a general-purpose CPU, a microprocessor, an ASIC, or one or more integrated circuits to perform a related operation, so as to implement the technical solutions provided in the embodiments of this application.

It should be noted that although only the processor 1010b, the transceiver 1020b, and the memory 1030b in the terminal device 1000b are shown in FIG. 10b, in a specific implementation process, a person skilled in the art should understand that the terminal device 1000b further includes another component required for normal running. In addition, according to a specific requirement, a person skilled in the art should understand that the terminal device 1000b may further include hardware components for implementing other additional functions. Moreover, a person skilled in the art should understand that the terminal device 1000b may include only components or modules essential for implementing this embodiment of this application, but not necessarily include all the components shown in FIG. 10b.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may be a magnetic disk, an optical disk, a ROM, a RAM, or the like.

As shown in FIG. 11a, a terminal device 1100a in an embodiment of this application includes a processing module 1110a and a receiving module 1120a. The processing module 1110a is configured to determine a first parameter. The receiving module 1120a is configured to receive the first signal sent by the base station based on the first parameter, where the first signal is used to indicate a paging status of the terminal device. The processing module is configured to determine the paging status of the terminal device based on the first signal received by the receiving module.

For all possible implementations of the terminal device 1100a in this embodiment of this application, refer to all the possible implementations of the base station 800a in the embodiments of this application.

It should be noted that in this embodiment of this application, the processing module 1110a may be implemented by a processor, and the receiving module 1120a may be implemented by a transceiver. As shown in FIG. 11b, a terminal device 1100b may include a processor 1110b, a transceiver 1120b, and a memory 1130b. The memory 1130b may be configured to store a program/code pre-installed by the terminal device 1100b at delivery, or may store code or the like used for execution by the processor 1110b.

The processor 1110b may use a general-purpose CPU, a microprocessor, an ASIC, or one or more integrated circuits to perform a related operation, so as to implement the technical solutions provided in the embodiments of this application.

It should be noted that although only the processor 1110b, the transceiver 1120b, and the memory 1130b in the terminal device 1100b are shown in FIG. 11b, in a specific implementation process, a person skilled in the art should understand that the terminal device 1100b further includes another component required for normal running. In addition, according to a specific requirement, a person skilled in the art should understand that the terminal device 1100b may further include hardware components for implementing other additional functions. Moreover, a person skilled in the art should understand that the terminal device 1100b may include only components or modules essential for implementing this embodiment of this application, but not necessarily include all the components shown in FIG. 11b.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may be a magnetic disk, an optical disk, a ROM, a RAM, or the like.

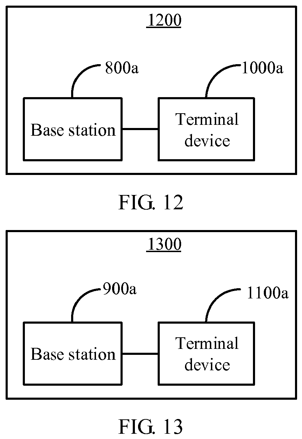

As shown in FIG. 12, a communications system 1210 in an embodiment of this application includes any possible base station 800a shown in FIG. 8a and any possible terminal device 1000a shown in FIG. 10a.

As shown in FIG. 13, a communications system 1300 in an embodiment of this application includes any possible base station 800a shown in FIG. 9a and any possible terminal device 1100a shown in FIG. 11a.

In conclusion, in this application, the base station determines the first parameter, and notifies the terminal device of all or a part of the determined first parameter by using the system message and/or higher layer signaling; or the base station determines the first parameter, and sends the first signal to the terminal device based on the first parameter, where the first signal is used to indicate the paging status of the terminal device, and the first parameter includes the information used to indicate the resource location of the first signal. This signal transmission manner avoids a case in which the terminal schedules a PDCCH to determine the paging status of the terminal. Therefore, power consumption of the terminal device is reduced to some extent.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer readable memory that can instruct the computer or the another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. A signal sending method, comprising:
determining (100a), by a network device, a first parameter;
notifying (110a), by the network device, the first parameter by using a system message wherein
the first parameter comprises information used to indicate a resource location of a first signal; and
sending (120a), by the network device, the first signal to the terminal device based on the resource location of the first signal, wherein the first signal is used to indicate a paging status of the terminal device, and the paging status of the terminal device represents whether the network device paging the terminal device;
wherein that the first signal is corresponding to at least one terminal device identifier, and the first signal is used to indicate a paging status of at least one terminal device identified by the at least one terminal device identifier comprises:
the first signal is a first sequence, the first sequence is a sequence that is in a first sequence set and that is corresponding to an actual paging status of the at least one terminal device identified by the at least one terminal device identifier, the first sequence set comprises at least one sequence, and each sequence is used to indicate one paging status of the at least one terminal device identified by the at least one terminal device identifier.

2. The method according to claim 1, wherein the first signal is further used to
indicate a system message modification status.

3. A signal receiving method, comprising:
receiving (130a), by a terminal device, a first parameter from using a system message, wherein
the first parameter comprises information used to indicate a resource location of a first signal;
receiving (140a), by the terminal device based on the resource location of the first signal, the first signal from the network device, wherein the first signal is used to indicate a paging status of the terminal device; and
determining (150a), by the terminal device, the paging status of the terminal device based on the first signal, and the paging status of the terminal device represents whether the network device paging the terminal device;
wherein that the first signal is corresponding to at least one terminal device identifier, and the first signal is used to indicate a paging status of at least one terminal device identified by the at least one terminal device identifier comprises:
the first signal is a first sequence, the first sequence is a sequence that is in a first sequence set and that is corresponding to an actual paging status of the at least one terminal device identified by the at least one terminal device identifier, the first sequence set comprises at least one sequence, and each sequence is used to indicate one paging status of the at least one terminal device identified by the at least one terminal device identifier.

4. The method according to claim 3, wherein the determining, by the terminal device, the paging status of the terminal device based on the first signal comprises:
determining, by the terminal device, the paging status of the terminal device based on the first signal and a terminal device identifier identifying the terminal device.

5. The method according to claim 3 or 4, wherein the first signal is further used to
indicate a system message modification status.

6. A network device (800a), comprising:
a processing module (810a), configured to determine a first parameter, wherein the first parameter comprises information used to indicate a resource location of a first signal; and
a sending module (820a), configured to notify, by using a system message, the first parameter determined by the processing module (810a), wherein
the sending module (820a) is configured to send the first signal to the terminal device based on the resource location of the first signal determined by the processing module (810a), wherein the first signal is used to indicate a paging status of the terminal device, and the paging status of the terminal device represents whether the network device paging the terminal device;
wherein that the first signal is corresponding to at least one terminal device identifier, and the first signal is used to indicate a paging status of at least one terminal device identified by the at least one terminal device identifier comprises:
the first signal is a first sequence, the first sequence is a sequence that is in a first sequence set and that is corresponding to an actual paging status of the at least one terminal device identified by the at least one terminal device identifier, the first sequence set comprises at least one sequence, and each sequence is used to indicate one paging status of the at least one terminal device identified by the at least one terminal device identifier.

7. The network device according to claim 6, wherein the first signal sent by the sending module (820a) is
further used to indicate a system message modification status.

8. A terminal device (1000a), comprising:
a receiving module (1020a), configured to: receive a first parameter by using a system message, wherein the first parameter comprises information used to indicate a resource location of a first signal; and receive the first signal from the network device based on the resource location of the first signal, wherein the first signal is used to indicate a paging status of the terminal device; and
a processing module (1010a), configured to determine the paging status of the terminal device based on the first signal received by the receiving module (1020a), and the paging status of the terminal device represents whether the network device paging the terminal device;
wherein that the first signal is corresponding to at least one terminal device identifier, and the first signal is used to indicate a paging status of at least one terminal device identified by the at least one terminal device identifier comprises:
the first signal is a first sequence, the first sequence is a sequence that is in a first sequence set and that is corresponding to an actual paging status of the at least one terminal device identified by the at least one terminal device identifier, the first sequence set comprises at least one sequence, and each sequence is used to indicate one paging status of the at least one terminal device identified by the at least one terminal device identifier.

9. The terminal device according to claim 8, wherein the determining, by the terminal device, the paging status of the terminal device based on the first signal comprises:
determining, by the terminal device, the paging status of the terminal device based on the first signal and a terminal device identifier identifying the terminal device.

10. The terminal device according to claim 8 or 9, wherein the first signal comprised in the first parameter received by the receiving module (1020a) is further
used to indicate a system message modification status.

11. A computer-readable storage medium having instruction recorded thereon; wherein the instruction makes a computer implement the method of claim 1 or 2.

12. A computer-readable storage medium having instruction recorded thereon; wherein the instruction makes a computer implement the method of any one of claims 3 to 5.

## Patentansprüche

1. Signalsendeverfahren, umfassend:
Bestimmen (100a) eines ersten Parameters durch eine Netzwerkvorrichtung;
Melden (110a) des ersten Parameters durch die Netzwerkvorrichtung unter Verwendung einer Systemnachricht,
wobei
der erste Parameter Informationen umfasst, die verwendet werden, um einen Ressourcenstandort eines ersten Signals anzugeben; und Senden (120a) des ersten Signals an das Endgerät durch die Netzwerkvorrichtung auf Grundlage des Ressourcenstandorts des ersten Signals, wobei das erste Signal verwendet wird, um einen Funkrufstatus des Endgeräts anzugeben, und der Funkrufstatus des Endgeräts wiedergibt, ob die Netzwerkvorrichtung das Endgerät anruft;
wobei die Tatsache, dass das erste Signal mindestens einer Endgerätkennung entspricht und das erste Signal verwendet wird, um einen Funkrufstatus mindestens eines Endgeräts anzugeben, das durch die mindestens eine Endgerätkennung identifiziert wird, Folgendes umfasst:
bei dem ersten Signal handelt es sich um eine erste Sequenz, wobei es sich bei der ersten Sequenz um eine Sequenz handelt, die sich in einem ersten Sequenzsatz befindet und einem tatsächlichen Funkrufstatus des mindestens einen Endgeräts entspricht, das durch die mindestens eine Endgerätkennung identifiziert wird, wobei der erste Sequenzsatz mindestens eine Sequenz umfasst und jede Sequenz verwendet wird, um einen Funkrufstatus des mindestens einen Endgeräts anzugeben, das durch die mindestens eine Endgerätkennung identifiziert wird.

2. Verfahren nach Anspruch 1, wobei das erste Signal ferner verwendet wird, um einen Systemnachricht-Modifikationsstatus anzugeben.

3. Signalempfangsverfahren, umfassend:
Empfangen (130a) eines ersten Parameters aus einer Systemnachricht durch ein Endgerät, wobei der erste Parameter Informationen umfasst, die verwendet werden, um einen Ressourcenstandort eines ersten Signals anzugeben;
Empfangen (140a) des ersten Signals von der Netzwerkvorrichtung durch das Endgerät auf Grundlage des Ressourcenstandorts des ersten Signals, wobei das erste Signal verwendet wird, um einen Funkrufstatus des Endgeräts anzugeben; und
Bestimmen (150a) des Funkrufstatus des Endgeräts durch das Endgerät auf Grundlage des ersten Signals und wobei der Funkrufstatus des Endgeräts wiedergibt, ob die Netzwerkvorrichtung das Endgerät anruft;
wobei die Tatsache, dass das erste Signal mindestens einer Endgerätkennung entspricht und das erste Signal verwendet wird, um einen Funkrufstatus mindestens eines Endgeräts anzugeben, das durch die mindestens eine Endgerätkennung identifiziert wird, Folgendes umfasst:
bei dem ersten Signal handelt es sich um eine erste Sequenz, wobei es sich bei der ersten Sequenz um eine Sequenz handelt, die sich in einem ersten Sequenzsatz befindet und einem tatsächlichen Funkrufstatus des mindestens einen Endgeräts entspricht, das durch die mindestens eine Endgerätkennung identifiziert wird, wobei der erste Sequenzsatz mindestens eine Sequenz umfasst und jede Sequenz verwendet wird, um einen Funkrufstatus des mindestens einen Endgeräts anzugeben, das durch die mindestens eine Endgerätkennung identifiziert wird.

4. Verfahren nach Anspruch 3, wobei das Bestimmen des Funkrufstatus des Endgeräts durch das Endgerät auf Grundlage des ersten Signals Folgendes umfasst:
Bestimmen des Funkrufstatus des Endgeräts durch das Endgerät auf Grundlage des ersten Signals und einer Endgerätkennung, die das Endgerät identifiziert.

5. Verfahren nach Anspruch 3 oder 4, wobei das erste Signal ferner verwendet wird, um einen Systemnachricht-Modifikationsstatus anzugeben.

6. Netzwerkvorrichtung (800a), umfassend:
ein Verarbeitungsmodul (810a), das dazu konfiguriert ist, einen ersten Parameter zu bestimmen, wobei der erste Parameter Informationen umfasst, die verwendet werden, um einen Ressourcenstandort eines ersten Signals anzugeben; und
ein Sendemodul (820a), das dazu konfiguriert ist, den durch das Verarbeitungsmodul (810a) bestimmten ersten Parameter unter Verwendung einer Systemnachricht zu melden, wobei das Sendemodul (820a) dazu konfiguriert ist, das erste Signal auf Grundlage des Ressourcenstandorts des durch das Verarbeitungsmodul (810a) bestimmten ersten Signals an das Endgerät zu senden, wobei das erste Signal verwendet wird, um einen Funkrufstatus des Endgeräts anzugeben, und der Funkrufstatus des Endgeräts wiedergibt, ob die Netzwerkvorrichtung das Endgerät anruft;
wobei die Tatsache, dass das erste Signal mindestens einer Endgerätkennung entspricht und das erste Signal verwendet wird, um einen Funkrufstatus mindestens eines Endgeräts anzugeben, das durch die mindestens eine Endgerätkennung identifiziert wird, Folgendes umfasst:
bei dem ersten Signal handelt es sich um eine erste Sequenz, wobei es sich bei der ersten Sequenz um eine Sequenz handelt, die sich in einem ersten Sequenzsatz befindet und einem tatsächlichen Funkrufstatus des mindestens einen Endgeräts entspricht, das durch die mindestens eine Endgerätkennung identifiziert wird, wobei der erste Sequenzsatz mindestens eine Sequenz umfasst und jede Sequenz verwendet wird, um einen Funkrufstatus des mindestens einen Endgeräts anzugeben, das durch die mindestens eine Endgerätkennung identifiziert wird.

7. Netzwerkvorrichtung nach Anspruch 6, wobei das durch das Sendemodul (820a) gesendete erste Signal ferner verwendet wird, um einen Systemnachricht-Modifikationsstatus anzugeben.

8. Endgerät (1000a), umfassend:
ein Empfangsmodul (1020a), das zu Folgendem konfiguriert ist:
Empfangen eines ersten Parameters unter Verwendung einer Systemnachricht, wobei der erste Parameter Informationen umfasst, die verwendet werden, um einen Ressourcenstandort eines ersten Signals anzugeben; und Empfangen des ersten Signals von der Netzwerkvorrichtung auf Grundlage des Ressourcenstandorts des ersten Signals, wobei das erste Signal verwendet wird, um einen Funkrufstatus des Endgeräts anzugeben; und
ein Verarbeitungsmodul (1010a), das dazu konfiguriert ist, den Funkrufstatus des Endgeräts auf Grundlage des durch das Empfangsmodul (1020a) empfangenen ersten Signals zu bestimmen, und wobei der Funkrufstatus des Endgeräts wiedergibt, ob die Netzwerkvorrichtung das Endgerät anruft;
wobei die Tatsache, dass das erste Signal mindestens einer Endgerätkennung entspricht und das erste Signal verwendet wird, um einen Funkrufstatus mindestens eines Endgeräts anzugeben, das durch die mindestens eine Endgerätkennung identifiziert wird, Folgendes umfasst:
bei dem ersten Signal handelt es sich um eine erste Sequenz, wobei es sich bei der ersten Sequenz um eine Sequenz handelt, die sich in einem ersten Sequenzsatz befindet und einem tatsächlichen Funkrufstatus des mindestens einen Endgeräts entspricht, das durch die mindestens eine Endgerätkennung identifiziert wird, wobei der erste Sequenzsatz mindestens eine Sequenz umfasst und jede Sequenz verwendet wird, um einen Funkrufstatus des mindestens einen Endgeräts anzugeben, das durch die mindestens eine Endgerätkennung identifiziert wird.

9. Endgerät nach Anspruch 8, wobei das Bestimmen des Funkrufstatus des Endgeräts durch das Endgerät auf Grundlage des ersten Signals Folgendes umfasst:
Bestimmen des Funkrufstatus des Endgeräts durch das Endgerät auf Grundlage des ersten Signals und einer Endgerätkennung, die das Endgerät identifiziert.

10. Endgerät nach Anspruch 8 oder 9, wobei das in dem durch das Empfangsmodul (1020a) empfangenen ersten Parameter enthaltene erste Signal ferner verwendet wird, um einen Systemnachricht-Modifikationsstatus anzugeben.

11. Computerlesbares Speichermedium, auf dem eine Anweisung aufgezeichnet ist,
wobei die Anweisung einen Computer dazu veranlasst, das Verfahren nach Anspruch 1 oder 2 umzusetzen.

12. Computerlesbares Speichermedium, auf dem eine Anweisung aufgezeichnet ist,
wobei die Anweisung einen Computer dazu veranlasst, das Verfahren nach einem der Ansprüche 3 bis 5 umzusetzen.

## Revendications

1. Procédé d'envoi de signal, comprenant :
la détermination (100a), par un dispositif de réseau, d'un premier paramètre ;
la notification (110a), par le dispositif de réseau, du premier paramètre en utilisant un message système dans lequel le premier paramètre comprend des informations utilisées pour indiquer un emplacement de ressource d'un premier signal ; et
l'envoi (120a), par le dispositif de réseau, du premier signal au dispositif terminal sur la base de l'emplacement de ressource du premier signal, dans lequel le premier signal est utilisé pour indiquer un état de recherche du dispositif terminal, et l'état de recherche du dispositif terminal représente si le dispositif de réseau recherche le dispositif terminal ;
dans lequel le fait que le premier signal corresponde à au moins un identifiant de dispositif terminal, et que le premier signal soit utilisé pour indiquer un état de recherche d'au moins un dispositif terminal identifié par l'au moins un identifiant de dispositif terminal comprend
le premier signal est une première séquence, la première séquence est une séquence qui est dans un premier ensemble de séquences et qui correspond à un état de recherche réel de l'au moins un dispositif terminal identifié par l'au moins un identifiant de dispositif terminal, le premier ensemble de séquences comprend au moins une séquence, et chaque séquence est utilisée pour indiquer un état de recherche de l'au moins un dispositif terminal identifié par l'au moins un identifiant de dispositif terminal.

2. Procédé selon la revendication 1, dans lequel le premier signal est en outre utilisé pour indiquer un état de modification de message système.

3. Procédé de réception de signal, comprenant :
la réception (130a), par un dispositif terminal, d'un premier paramètre envoyé à partir de l'utilisation d'un message système, dans lequel
le premier paramètre comprend des informations utilisées pour indiquer un emplacement de ressource d'un premier signal ;
la réception (140a), par le dispositif terminal sur la base de l'emplacement de ressource du premier signal, du premier signal à partir du dispositif de réseau, dans lequel le premier signal est utilisé pour indiquer un état de recherche du dispositif terminal ; et
la détermination (150a), par le dispositif terminal, de l'état de recherche du dispositif terminal sur la base du premier signal, et l'état de recherche du dispositif terminal représente si le dispositif de réseau recherche le dispositif terminal ;
dans lequel le fait que le premier signal corresponde à au moins un identifiant de dispositif terminal, et que le premier signal soit utilisé pour indiquer un état de recherche d'au moins un dispositif terminal identifié par l'au moins un identifiant de dispositif terminal comprend :
le premier signal est une première séquence, la première séquence est une séquence qui est dans un premier ensemble de séquences et qui correspond à un état de recherche réel de l'au moins un dispositif terminal identifié par l'au moins un identifiant de dispositif terminal, le premier ensemble de séquences comprend au moins une séquence, et chaque séquence est utilisée pour indiquer un état de recherche de l'au moins un dispositif terminal identifié par l'au moins un identifiant de dispositif terminal.

4. Procédé selon la revendication 3, dans lequel la détermination, par le dispositif terminal, de l'état de recherche du dispositif terminal sur la base du premier signal comprend :
la détermination, par le dispositif terminal, de l'état de recherche du dispositif terminal sur la base du premier signal et d'un identifiant de dispositif terminal identifiant le dispositif terminal.

5. Procédé selon la revendication 3 ou 4, dans lequel le premier signal est en outre utilisé pour indiquer un état de modification de message système.

6. Dispositif de réseau (800a), comprenant :
un module de traitement (810a), conçu pour déterminer un premier paramètre, dans lequel le premier paramètre comprend des informations utilisées pour indiquer un emplacement de ressource d'un premier signal ; et
un module d'envoi (820a), conçu pour notifier, en utilisant un message système, le premier paramètre déterminé par le module de traitement (810a), dans lequel
le module d'envoi (820a) est conçu pour envoyer le premier signal au dispositif terminal sur la base de l'emplacement de ressource du premier signal déterminé par le module de traitement (810a), dans lequel le premier signal est utilisé pour indiquer un état de recherche du dispositif terminal, et l'état de recherche du dispositif terminal représente si le dispositif de réseau recherche le dispositif terminal ;
dans lequel le fait que le premier signal corresponde à au moins un identifiant de dispositif terminal, et que le premier signal soit utilisé pour indiquer un état de recherche d'au moins un dispositif terminal identifié par l'au moins un identifiant de dispositif terminal comprend :
le premier signal est une première séquence, la première séquence est une séquence qui est dans un premier ensemble de séquences et qui correspond à un état de recherche réel de l'au moins un dispositif terminal identifié par l'au moins un identifiant de dispositif terminal, le premier ensemble de séquences comprend au moins une séquence, et chaque séquence est utilisée pour indiquer un état de recherche de l'au moins un dispositif terminal identifié par l'au moins un identifiant de dispositif terminal.

7. Dispositif de réseau selon la revendication 6, dans lequel le premier signal envoyé par le module d'envoi (820a) est en outre utilisé pour indiquer un état de modification de message système.

8. Dispositif terminal (1000a), comprenant :
un module de réception (1020a), conçu pour : recevoir un premier paramètre en utilisant un message système, dans lequel le premier paramètre comprend des informations utilisées pour indiquer un emplacement de ressource d'un premier signal ; et recevoir le premier signal à partir du dispositif de réseau sur la base de l'emplacement de ressource du premier signal, dans lequel le premier signal est utilisé pour indiquer un état de recherche du dispositif terminal ; et
un module de traitement (1010a), conçu pour déterminer l'état de recherche du dispositif terminal sur la base du premier signal reçu par le module de réception (1020a), et l'état de recherche du dispositif terminal représente si le dispositif de réseau recherche le dispositif terminal ;
dans lequel le fait que le premier signal corresponde à au moins un identifiant de dispositif terminal, et que le premier signal soit utilisé pour indiquer un état de recherche d'au moins un dispositif terminal identifié par l'au moins un identifiant de dispositif terminal comprend :
le premier signal est une première séquence, la première séquence est une séquence qui est dans un premier ensemble de séquences et qui correspond à un état de recherche réel de l'au moins un dispositif terminal identifié par l'au moins un identifiant de dispositif terminal, le premier ensemble de séquences comprend au moins une séquence, et chaque séquence est utilisée pour indiquer un état de recherche de l'au moins un dispositif terminal identifié par l'au moins un identifiant de dispositif terminal.

9. Dispositif terminal selon la revendication 8, dans lequel la détermination, par le dispositif terminal, de l'état de recherche du dispositif terminal sur la base du premier signal comprend :
la détermination, par le dispositif terminal, de l'état de recherche du dispositif terminal sur la base du premier signal et d'un identifiant de dispositif terminal identifiant le dispositif terminal.

10. Dispositif terminal selon la revendication 8 ou 9, dans lequel le premier signal compris dans le premier paramètre reçu par le module de réception (1020a) est en outre utilisé pour indiquer un état de modification de message système.

11. Support de stockage lisible par ordinateur ayant une instruction enregistrée sur celui-ci ;
dans lequel l'instruction amène un ordinateur à mettre en œuvre le procédé selon la revendication 1 ou 2.

12. Support de stockage lisible par ordinateur ayant une instruction enregistrée sur celui-ci ;
dans lequel l'instruction amène un ordinateur à mettre en œuvre le procédé selon l'une quelconque des revendications 3 à 5.
